(19) Europäisches Patentamt
European Patent Office
Office européen des brevets

(11) **EP 3 762 596 B1**

(12) **FASCICULE DE BREVET EUROPEEN**

(45) Date de publication et mention de la délivrance du brevet:
**22.02.2023 Bulletin 2023/08**

(21) Numéro de dépôt: **19717513.6**

(22) Date de dépôt: **28.02.2019**

(51) Classification Internationale des Brevets (IPC):
**F02C 9/30** *(2006.01)*     **F01D 17/26** *(2006.01)*
**F02C 9/26** *(2006.01)*

(52) Classification Coopérative des Brevets (CPC):
**F02C 9/30; F01D 17/26; F02C 9/263;**
F05D 2250/90; F05D 2260/406; F05D 2270/44

(86) Numéro de dépôt international:
**PCT/FR2019/050456**

(87) Numéro de publication internationale:
**WO 2019/170984 (12.09.2019 Gazette 2019/37)**

(54) **COMMANDE ANTICIPATIVE D'UN CIRCUIT D'ALIMENTATION EN CARBURANT D'UNE TURBOMACHINE**

VORSTEUERUNG EINER BRENNSTOFFVERSORGUNGSSCHALTUNG EINER TURBOMASCHINE

ANTICIPATORY CONTROL OF A TURBOMACHINE FUEL SUPPLY CIRCUIT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.03.2018 FR 1851879**

(43) Date de publication de la demande:
**13.01.2021 Bulletin 2021/02**

(73) Titulaire: **SAFRAN AIRCRAFT ENGINES**
**75015 Paris (FR)**

(72) Inventeurs:
• **DE WERGIFOSSE, Huguette**
**77550 MOISSY-CRAMAYEL (FR)**
• **PORA, Loïc**
**77550 MOISSY-CRAMAYEL (FR)**

(74) Mandataire: **Gevers & Orès**
**9 rue St Antoine du T**
**31000 Toulouse (FR)**

(56) Documents cités:
**EP-A1- 2 599 982     FR-A1- 2 934 321**
**US-A1- 2010 064 657**

**Description**

**Domaine de l'invention:**

La présente invention se rapporte au domaine des turbomachines. Elle concerne plus particulièrement le circuit d'alimentation en carburant et la régulation du débit de carburant dans ce circuit.

**État de la technique** :

L'état de la technique comporte notamment les demandes de brevet US-A1-2010/064657, FR-A1-2 934 321 et EP-A1 2 599 982.

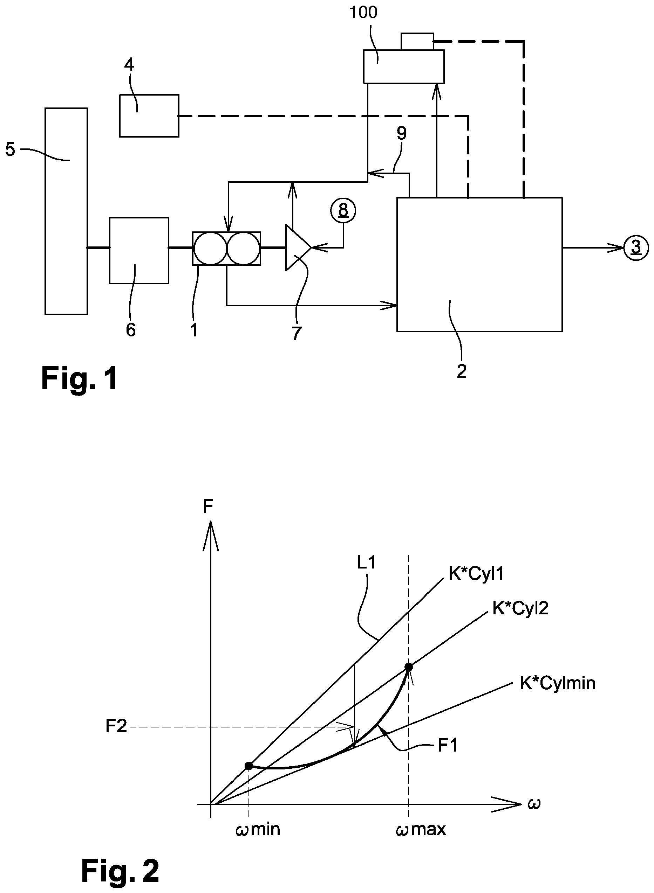

Les turbomachines installées sur un aéronef sont équipées d'un circuit d'alimentation en carburant, délivrant le carburant à la chambre de combustion, qui doit être régulé en fonction du besoin selon les conditions de vol. En référence à la figure 1, le circuit de carburant comprend généralement une pompe 1 principale haute pression de type volumétrique qui envoie le carburant vers un groupe hydromécanique 2 avant l'injection vers la chambre de combustion 3. L'ensemble est agencé pour assurer, en sortie vers la chambre de combustion, un débit de carburant adapté au besoin. Un boîtier de commande 4 pilote généralement le groupe hydromécanique 2 pour qu'il adapte le débit envoyé par la pompe 1 au besoin de la chambre de combustion 3.

En général, la pompe 1 est entraînée par un arbre de sortie du boîtier d'accessoires 5 de la turbomachine, lui-même entraîné par un axe du corps primaire de la turbomachine, non représenté sur la figure 1. Un dispositif d'entraînement 6 est généralement installé entre l'arbre du boîtier de relais d'accessoires 5 et la pompe 1 pour adapter les régimes de rotation entre ces deux équipements. Ce dispositif détermine un rapport K entre la vitesse de la pompe 1 et la vitesse de rotation $\omega$ de l'axe moteur de la turbomachine. Ce dispositif entraîne généralement aussi un moyen d'alimentation 7 du circuit à partir des réservoirs de carburant 8.

La caractéristique linéaire Cyl de la pompe 1 entre le débit de carburant et sa vitesse d'entraînement dépend en particulier de sa cylindrée. La pompe 1 doit être dimensionnée de telle manière que cette cylindrée permette de délivrer les débits requis pour tous les régimes de fonctionnement de la turbomachine, donc de vitesse de l'arbre de sortie du boîtier de relais d'accessoires 5, aussi bien à basse vitesse qu'à haute vitesse.

Comme on peut le voir sur la figure 2, représentant les variations de débit F en fonction de la vitesse de rotation $\omega$AGB (AGB - Accessory Gear Box - boîtier relais d'accessoires) de l'axe moteur de la turbomachine, le besoin F1 en carburant varie de façon non linéaire en fonction du régime de la turbomachine. La vitesse de rotation $\omega$AGB de l'axe moteur de la turbomachine varie entre une valeur minimale $\omega$AGBmin, pour l'allumage de la turbomachine, et une valeur maximale wAGBmax pour le décollage. Le régime correspondant à un vol de croisière se situe entre ces deux extrêmes.

Suivant l'application, le point crucial est situé soit à l'allumage basse vitesse soit au décollage, à haute vitesse. Sur la figure 2, ce point crucial se situe au niveau de l'allumage, il faut choisir la cylindrée de la pompe de telle manière que sa caractéristique linéaire soit égale à la valeur Cyl1, pour assurer un débit suffisant lors de toutes les conditions de vol. Cette valeur Cyl1 peut être significativement supérieure à la valeur minimale Cylmin nécessaire dans certaines conditions de vol, voire à celle Cyl2 nécessaire lors du décollage.

Suivant ce dimensionnement, le débit fourni par la pompe suit donc la droite L1 sur le diagramme débit/vitesse de rotation de la figure 2. Pendant une large phase de vitesse d'entraînement, notamment en vol de croisière, la pompe délivre donc un débit supérieur au besoin en débit carburant, donc un surplus F2 de carburant.

Le groupe hydromécanique 2 doit donc renvoyer vers la pompe, par une boucle de recirculation 9, le surplus de carburant F2 par rapport au besoin.

Ce problème de régulation du débit de carburant est encore accentué lorsque le circuit de carburant est utilisé, comme indiqué sur la figure 1, pour alimenter des actionneurs 100 à géométries variables (GV) actionnant des éléments mobiles 10 (tels que des aubages à calage variable) de la turbomachine. L'actionnement des éléments mobiles 10 crée des variations de besoin en carburant dans le circuit qui doivent être prises en compte dans le dimensionnement de la pompe 1, dans le fonctionnement du groupe hydromécanique 2 et dans les caractéristiques de la boucle de recirculation 9.

Cette architecture du système d'alimentation en carburant présente plusieurs inconvénients. Le surplus de débit injecté par la pompe 1 induit un surplus de prélèvement de puissance sur le boîtier de relais d'accessoires 5 par rapport au besoin, préjudiciable au rendement de la turbomachine. Le surplus de puissance mécanique se transforme en puissance thermique dissipée dans la boucle de recirculation 9 qui doit être évacuée. Cela a une influence négative sur la taille et la masse du circuit de carburant, notamment pour des échangeurs thermiques, non représentés, placés pour évacuer la chaleur dans ce circuit.

Il est donc important d'adapter le débit de la pompe 1 aux différents points de fonctionnement de la turbomachine pour gagner en puissance prélevée sur le boîtier de relais d'accessoires 5, ce que ne permet pas le dispositif d'entraînement 6 de l'état de l'art.

Par ailleurs, un groupe hydromécanique 2 selon l'état de la technique, non détaillé sur la figure, est généralement composé :

- d'un doseur piloté par une servovalve dont la position est contrôlée par un capteur de position ;
- d'une soupape régulatrice, envoyant le surplus de débit délivré par la pompe dans la boucle de recirculation 9, et régulant la différence de pression aux bornes du doseur ;
- D'un clapet stop, piloté par une servovalve permettant de pressuriser le système carburant et de couper l'injection.

Pour que le groupe hydromécanique 2 fonctionne correctement, une recirculation est nécessaire afin d'assurer un écart de pression aux bornes du doseur, que les géométries variables 100 soient actionnées ou pas.

Ainsi, le dimensionnement de la pompe 1 est normalement réalisé en considérant un surplus de débit égal à la somme des fuites du système, du débit minimum nécessaire pour réguler l'écart de pression aux bornes du doseur et du débit lié aux déplacements des éléments mobiles 10.

En admettant que l'on ait solutionné le problème de l'adaptation de la vitesse de rotation de la pompe selon les points de fonctionnement de la turbomachine, un circuit carburant classique nécessite ce dernier surplus de débit. Il ne permet donc pas d'atteindre le gain maximum de puissance rendu possible par une éventuelle adaptation du régime de la pompe 1 au strict besoin.

Une première solution a été proposée pour permettre l'adaptation du régime de la pompe pour fournir un débit adapté au besoin, en effectuant une mesure de débit carburant et en adaptant la vitesse de rotation de l'arbre de la pompe en fonction de cette mesure. Cette boucle de régulation en débit est régie par le calculateur FADEC (pour *Full Automatic Digital Engine Control* en anglais) dont la bande passante est de l'ordre de 10 à 20 Hz. Cette solution présente donc un temps de réaction important et est par conséquent peu réactif aux appels de débits des géométries variables commandés par le FADEC. Si cette solution est adaptée à un circuit carburant sans géométrie variable (cas de GV électriques par exemple), l'impact d'appels de débit de GV sur le débit injecté dépendra du niveau de débit appelé et du temps de réaction de cette boucle de régulation.

Une autre solution a été d'ajouter en plus une boucle locale rapide basée sur la mesure de la pression en sortie de la pompe volumétrique, En effet, lors de ces appels de débit dû aux Géométries Variables, une chute de pression sera observée à la sortie de la pompe volumétrique.

Cette solution présente toutefois des inconvénients :

- la compensation de la chute de pression lors des appels de débits liés à la commande des géométries variables dépend de la dynamique de cette boucle locale en pression,
- si la puissance électrique installée pour accélérer l'inertie faible des moteurs est insuffisante, la vitesse de la pompe ne pourra pas être augmentée de nouveau et le débit pompe ne pourra pas être réajusté,
- la conversion d'une consigne de débit en consigne de pression requiert la connaissance exacte des volumes de compressibilité du circuit hydraulique,
- un capteur de pression est à mettre en place à la sortie de la pompe.

L'invention a pour objectif de proposer une solution permettant de tirer parti de manière plus optimale d'un gain de puissance autorisé par l'adaptation du régime de la pompe au besoin en carburant de la turbomachine pour ses différents points de fonctionnement, et permettant de compenser anticipativement les appels de débits des géométries variables.

**Exposé de l'invention :**

À cet effet, l'invention concerne un système d'alimentation en carburant d'une turbomachine, comportant un circuit de carburant comportant un moyen de pressurisation en sortie dudit circuit, une pompe agencée pour envoyer dans ledit circuit un débit de carburant qui est une fonction croissante de la vitesse de rotation d'un arbre de ladite pompe, un capteur de débit placé entre la sortie de la pompe et le moyen de pressurisation, le système comportant un dispositif agencé pour entraîner la pompe avec une vitesse de rotation commandable, et des moyens de commande agencés pour commander le dispositif à partir d'une mesure fournie par le capteur de débit, de manière à adapter la vitesse de rotation de l'arbre de la pompe pour respecter une consigne de débit en sortie du circuit de carburant, caractérisé en ce que le circuit de carburant alimente des géométries variables de la turbomachine, ladite alimentation démarrant par un piquage sur une dérivation placée entre la sortie de la pompe et le capteur de débit, et en ce que le système comprend en outre pour compenser les impacts des appels de débit dû aux Géométries Variables sur la ligne d'injection un correcteur anticipateur configuré pour calculer un incrément de la consigne de débit en fonction du régime moteur de la turbomachine et d'une variation dudit régime moteur de la turbomachine, et d'ajouter cet incrément à la consigne de débit.

Le pilotage des Géométries Variables (G.V) est réalisé par une boucle de commande au niveau du FADEC.

Cette boucle de commande génère une consigne de position sous la forme d'une commande en courant envoyée à la servovalve de la géométrie variable à piloter et reçoit un retour de position par le capteur de position localisé au niveau de la géométrie variable.

Le système selon l'invention permet donc, grâce au correcteur anticipateur (aussi désigné par le terme correcteur *feedforward* en anglais), de compenser anticipativement les appels de débits des géométries variables commandés par le FADEC.

Dans les systèmes de l'art antérieur, lorsque les géométries variables sont actionnées, le capteur de débit placé après la dérivation vers les actionneurs voit une baisse de débit, ce qui oblige les moyens de commande du dispositif d'entraînement à augmenter la vitesse de la pompe pour augmenter le débit afin d'alimenter la chambre d'injection et de maintenir la pression pour les actionneurs, coopérant pour cela avec le clapet de pressurisation. Le correcteur anticipateur permet de réduire le temps de réaction de ce mécanisme automatique lors des appels de débit des géométries variables.

En outre, l'anticipation de ces appels de débits des géométries variables affranchit du besoin de puissance électrique important auparavant pour réagir et obtenir la dynamique requise.

Ce système permet de s'affranchir des boucles de régulation en pression en sortie de pompe proposées dans l'art antérieur et le système est ainsi simplifié car il ne nécessite pas de capteur supplémentaire (notamment de pression, de vitesse ou de position) dans le système d'alimentation.

Enfin, compte-tenu des paramètres pris en compte, le correcteur anticipateur peut être intégré, avec les moyens de commande, dans un calculateur de type FADEC (acronyme pour *Full Authority Digital Engine Control* en anglais) de l'aéronef, sans nécessiter d'intervenir sur l'électronique de pilotage (ou ECU pour *Electronic Control Unit* en anglais) d'un moteur de la pompe.

Avantageusement et selon l'invention, le correcteur anticipateur détermine une position des éléments mobiles via la position des géométries variables à partir d'une loi associative prédéterminée liant la position des géométries variables au régime moteur, détermine une variation de ladite position des géométries variables à partir de ladite loi associative et de la variation du régime moteur de la turbomachine et de la position des géométries variables, et calcule l'incrément de la consigne de débit en multipliant ladite variation de la position des géométries variables par une section desdites géométries variables (ici des actionneurs).

Selon cet aspect de l'invention, le calcul de l'incrément est établi en fonction du régime moteur et d'une loi reliant la position des géométries variables au régime moteur et permet donc d'anticiper de façon simple les appels de débits des géométries variables. La loi associative peut être variable selon les turbomoteurs mais est connue pour le turbomoteur dans lequel le système est implémenté, pour tout le cycle de vol.

De préférence, des boucles de commande de débit carburant et position des G.V (Géométries Variables) ainsi que le correcteur anticipateur sont intégrés dans un FADEC d'un aéronef comprenant ledit turbomoteur.

Selon un mode de réalisation préféré, le capteur de débit est réalisé par un doseur comprenant un tiroir coulissant et un capteur de position dudit tiroir, le circuit étant agencé pour que la position dudit tiroir indique le débit passant par le doseur.

Cela permet d'utiliser des composants certifiés ou de faire évoluer une installation existante.

Avantageusement, le dispositif d'entraînement est destiné à entraîner la pompe à partir d'un axe moteur de ladite turbomachine et est agencé pour faire varier le rapport entre la vitesse de rotation de l'arbre de la pompe et celle de l'axe moteur.

De préférence, le dispositif d'entraînement comporte un réducteur à train épicycloïdal comprenant trois éléments, un planétaire central, une couronne externe et un porte-satellites dont les satellites s'engrènent avec le planétaire et la couronne, un premier des trois éléments étant destiné à être relié à l'axe moteur et un second des trois éléments étant destiné à être couplé à un arbre de la pompe, caractérisé en ce que lesdits trois éléments sont mobiles en rotation autour d'un axe du réducteur, en ce que ledit dispositif d'entraînement comporte en outre au moins des premiers moyens électriques agencés pour entraîner en rotation le troisième desdits éléments du réducteur, de manière à modifier un rapport de vitesse de rotation entre le premier et le second desdits éléments.

Cette solution comporte de multiples avantages. Elle permet entre autre d'utiliser le réducteur nécessaire pour fournir le bon rapport de réduction entre l'axe moteur et la pompe pour faire varier la vitesse de la pompe.

De préférence le dispositif d'entraînement comporte des seconds moyens électriques couplés au premier ou au second desdits éléments du réducteur, les premier et second moyens électriques étant agencés pour transférer de la puissance électrique de manière réversible de l'un à l'autre.

Cette solution permet un gain sur la puissance prélevée pour le fonctionnement de la pompe par un transfert de puissance entre les premiers et les seconds moyens électriques.

L'invention concerne également une turbomachine comportant un système selon l'invention.

Avantageusement, un boîtier de relais d'accessoires est placé entre l'axe moteur et le dispositif d'entraînement.

L'invention concerne aussi un procédé de régulation d'une pompe à carburant pour une telle turbomachine dans un aéronef mettant en oeuvre des lois de pilotage de la vitesse de rotation de l'arbre de la pompe, qui augmentent ou, respectivement, diminuent cette vitesse lorsque le débit indiqué par le capteur diminue ou augmente, de manière à ce que le débit et la pression en sortie du circuit soient adaptés aux conditions de vol de l'aéronef, caractérisé en ce qu'il comprend une étape de correction anticipatrice de la consigne de débit en fonction du régime moteur de la turbomachine et d'une variation dudit régime moteur de la turbomachine.

**Brève description des figures** :

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :

la figure 1 présente très schématiquement un circuit de carburant selon l'état de la technique ;
la figure 2 présente un diagramme en vitesse de rotation AGB et débit montrant l'écart entre le débit fourni par la pompe de carburant et le besoin pour un circuit selon la figure 1;
la figure 3 présente très schématiquement une demi coupe d'une turbomachine pouvant utiliser l'invention ;
la figure 4 présente des vues en éclaté et un schéma pour un réducteur à train épicycloïdal pouvant être utilisé par l'invention ;
la figure 5 présente le schéma d'un exemple de dispositif d'entraînement de la pompe utilisant un réducteur de la figure 4 ;
la figure 6 présente très schématiquement une configuration de système d'alimentation en carburant utilisant le dispositif de la figure 5 ; et
la figure 7 présente schématiquement un correcteur anticipateur d'un système d'alimentation selon un mode de réalisation de l'invention.

Les éléments ayant les mêmes fonctions dans les différentes mises en oeuvre ont les mêmes références dans les figures.

**Description d'un mode de réalisation** :

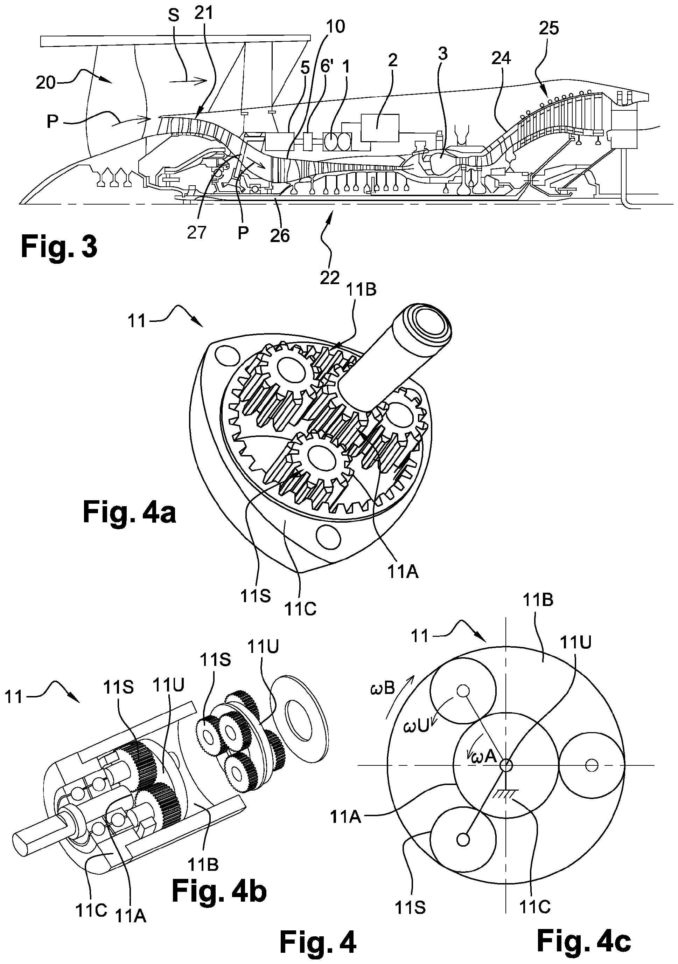

Dans une turbomachine, par exemple une turbomachine à double flux représentée sur la figure 3, le flux d'air en sortie de soufflante 20 se divise en un flux primaire P entrant dans le moteur et en un flux secondaire S entourant ce dernier. Le flux primaire traverse alors des compresseurs basse pression 21 et haute pression 22, la chambre de combustion 3 alimentée par le circuit de carburant précédemment évoqué, puis des turbines haute pression 24 et basse pression 25. Généralement, l'ensemble des compresseurs haute pression 22 et des turbines haute pression 24 tourne d'un bloc sur un axe commun 26 et forme la partie moteur de la turbomachine avec la chambre de combustion.

Généralement, l'axe moteur 26 entraîne le boîtier de relais d'accessoires 5 (via un arbre transfert 27 avec un système d'engrenage conique à renvoi d'angles) qui peut comporter plusieurs trains d'engrenages reliés à des arbres de sortie pour entraîner divers équipements. Ici un des arbres de sortie du boîtier d'engrenage entraîne, par un dispositif d'entraînement 6', la pompe volumétrique 1 qui alimente le groupe hydromécanique 2 injectant le carburant dans la chambre de combustion 3. Généralement aussi, le boîtier de relais d'accessoires fait le lien entre l'axe moteur 26 et un démarreur/générateur, non représenté sur cette figure, qui peut être utilisé pour entraîner la turbomachine lors des phases de démarrage ou générer un courant électrique lorsque la turbomachine est allumée.

La turbomachine peut aussi comporter des éléments mobiles 10, précédemment évoqués, que l'on peut activer dans certaines conditions d'utilisation par les actionneurs à géométries variables 100. Ces éléments mobiles 10 sont, par exemple, des aubes à calage variable en entrée de compresseur Haute Pression 22.

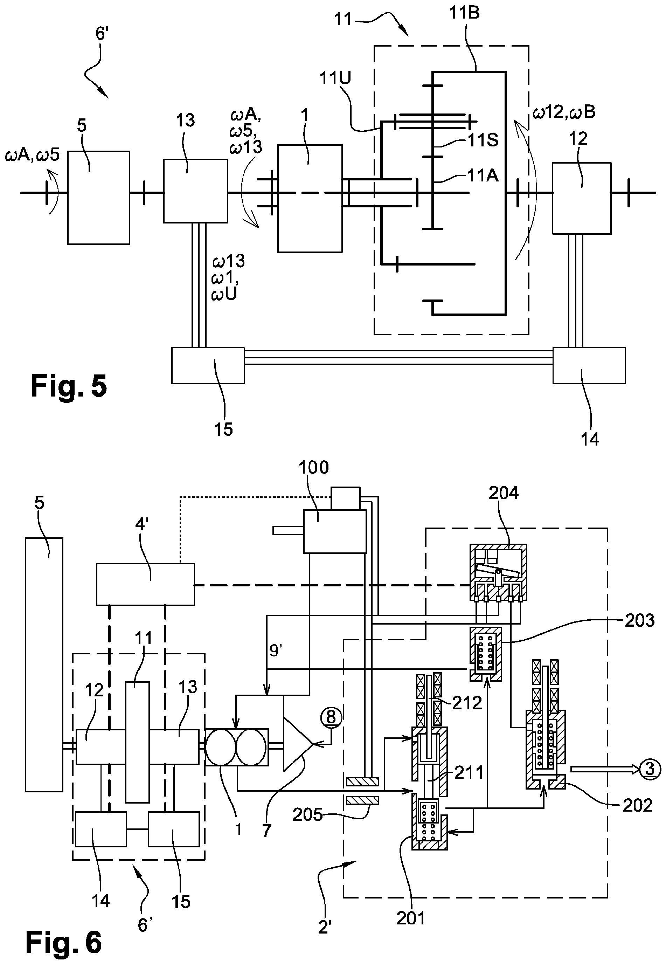

Ici, en référence à la figure 6, le système d'alimentation en carburant comporte un dispositif d'entraînement 6' entre le boîtier de relais d'accessoires 5 et la pompe 1 différent de celui du système de la figure 1. La pompe 1 peut être de même nature que pour la solution classique. C'est une pompe volumétrique rotative, dont le débit est une fonction croissante de la vitesse de rotation $\omega 1$, apte à fournir le débit nécessaire à l'injection dans la chambre de combustion 3 et à mettre le circuit carburant en pression. De préférence, elle a une caractéristique linéaire Cyl reliant le débit de sortie à la vitesse de rotation $\omega 1$.

Tout d'abord, nous allons montrer qu'il existe au moins une solution pour réaliser un dispositif 6' capable de faire varier le rapport entre la vitesse de rotation de l'arbre du boîtier de relais d'accessoires 5 et la vitesse de rotation de l'arbre de la pompe 1, afin de pouvoir adapter le régime de la pompe 1 aux différents points de fonctionnement de la turbomachine.

Le dispositif d'entraînement 6' représenté comporte un réducteur à train épicycloïdal dont on utilise les propriétés pour adapter la vitesse de rotation de la pompe 1 au besoin de débit de carburant suivant les différents régimes de fonctionnement de la turbomachine.

En référence, à la figure 4, le réducteur à train épicycloïdal 11 comporte :

- un planétaire central 11A, agencé pour pouvoir tourner autour de l'axe du train à une vitesse ωA ;
- des satellites 11S engrenant avec le planétaire central 11A et portés par un porte-satellites 11U, le porte-satellites 11U étant agencé pour pouvoir tourner autour de l'axe du train à une vitesse ωU ;
- Une couronne 11B externe avec laquelle les satellites 11S s'engrènent également, la couronne 11B étant agencée pour pouvoir tourner autour de l'axe du train à une vitesse ωB.

Une caractéristique du réducteur à train épicycloïdal 11 est donc que ses trois éléments, le planétaire central 11A, le porte-satellites 11U et la couronne 11B, sont capables de tourner. Ici, par exemple, la couronne 11B est libre de tourner à l'intérieur d'un carter fixe 11C protégeant le réducteur 11.

Le fonctionnement du train du réducteur 11 est régi par la formule de Willis qui montre qu'il s'agit d'un mécanisme à deux degrés de liberté et que la connaissance des vitesses de rotation de deux éléments parmi le planétaire central 11A, le porte-satellites 11U et la couronne 11B, permet le calcul de la vitesse de rotation du troisième.

Rotation du planétaire central 11A : ωA
Rotation du porte-satellites 11U : ωU
Rotation de la couronne 11B : ωB

$$\text{Formule de WILLIS : } (\omega A - \omega U) / (\omega B - \omega U) = k \text{ ou } \omega A - k^* \omega B + (k-1)^* \omega U = 0$$

Dans la formule de Willis, le facteur k, aussi appelé raison du train, est une constante déterminée par la géométrie des engrenages. Pour le réducteur 11 de la figure 4, k = - ZB/ZA, où ZA est le nombre de dents du planétaire central A et ZB le nombre de dents de la couronne B. Le facteur k est donc négatif avec un module inférieur à 1.

On comprend donc que, si l'arbre de sortie du boîtier de relais d'accessoires 5 est couplé à l'un des trois éléments et l'arbre de la pompe 1 est couplé à un deuxième élément, on peut faire varier la vitesse de rotation de la pompe 1 pour une vitesse donnée de l'arbre du boîtier 5 en faisant varier la vitesse de rotation du troisième élément.

Un premier moteur électrique 12 est couplé audit troisième élément pour piloter la vitesse de rotation de ce dernier.

Six combinaisons sont possibles pour positionner les trois équipements, boîtier de relais d'accessoires 5, pompe 1 et moteur électrique 12, par rapport aux trois éléments du réducteur à train épicycloïdal 11.

On couple également un second moteur 13 à l'un des éléments du réducteur 11 qui n'est pas relié au premier moteur 12. La position du second moteur 13 multiplie par deux le nombre de combinaisons possibles pour le dispositif 6'. On obtient ainsi douze combinaisons répertoriées dans le tableau ci-dessous.

Ce tableau indique également la fonction donnant la vitesse ω1 de la pompe 1 à partir de la vitesse ω5 de l'arbre du boîtier 5 et de la vitesse ω12 du premier moteur 12. La vitesse de rotation ω13 du second moteur 13 est déterminée par la vitesse de rotation de l'équipement avec lequel il est couplé en série sur le réducteur 11, soit l'arbre de la pompe 1, soit l'arbre de sortie du boîtier 5. Dans ce tableau, l'option 1 correspond aux cas où le second moteur 13 est couplé en série avec la pompe 1 sur le même élément du réducteur 11, et l'option 2 correspond aux cas où le second moteur 13 est couplé en série avec l'arbre de sortie du boîtier 5 de relais d'accessoires sur le même élément du réducteur 11.

Tableau 1.

| Liaison Boîtier/Pompe/ Premier moteur | | | Vitesse pompe | Liaison second moteur | |
|---|---|---|---|---|---|
| Boîtier 5 relié au porte-satellites 11U | | | | Option 1 | Option 2 |
| | Moteur 12 | Pompe 1 | | | |
| 1 A | couronne 11B | planétaire 11A | $\omega 1 = (1-k)^*\omega 5 + k^*\omega 12$ | planétaire A | porte-satellites 11U |
| 1 B | planétaire 11A | couronne 11B | $\omega 1 = -\omega 5^*(1-k)/k + \omega 12/k$ | couronne B | porte-satellites 11U |

(suite)

| Boîtier 5 relié à la couronne 11B | | | | Option 1 | Option 2 |
|---|---|---|---|---|---|
| | Moteur 12 | Pompe 1 | | | |
| 2 A | porte-satellites 11U | planétaire 11A | $\omega1 = k\,{}^*\omega5 + (1-k)^*\omega12$ | planétaire A | couronne B |
| 2 B | planétaire 11A | porte-satellites 11U | $\omega1 = -\omega5^*k/(1-k) + \omega12/(1-k)$ | porte-satellites 11U | couronne B |
| Boîtier 5 relié au planétaire 11A | | | | Option 1 | Option 2 |
| | Moteur 12 | Pompe 1 | | | |
| 3 A | couronne 11B | porte-satellites 11U | $\omega1 = \omega5/(1-k) - \omega12^*k/(1-k)$ | porte-satellites 11U | planétaire A |
| 3 B | porte-satellites 11U | couronne 11B | $\omega1 = \omega5/k - \omega12^*(1-k)/k$ | couronne B | planétaire A |

Sur l'exemple illustré en figure 5, correspondant à la configuration « 3A-Option1 », le boîtier 5 est relié au planétaire central 11A, la pompe au porte-satellites 11U, le premier moteur électrique 12 est relié à la couronne 11B, de manière à pouvoir entraîner en rotation cette dernière, et le second moteur 13 est relié au porte-satellites 11U.

Le premier moteur 12 et le second moteur 13 comportent chacun un stator et un rotor. Lesdits moteurs 12, 13 sont pilotables en couple appliqué sur leur rotor et en vitesse de rotation $\omega12$, $\omega13$ de leur rotor. Il s'agit par exemple de moteurs asynchrones en courant alternatif. Le couple et la vitesse de chaque moteur 12, 13 sont alors pilotés par la puissance électrique et la fréquence du courant envoyé par un convertisseur 14, 15 dédié à chacun.

Par ailleurs, le second moteur 13 est électriquement lié au premier moteur 12 par l'intermédiaire desdits convertisseurs de tension réversibles 14, 15, afin de faire passer de la puissance de l'un à l'autre.

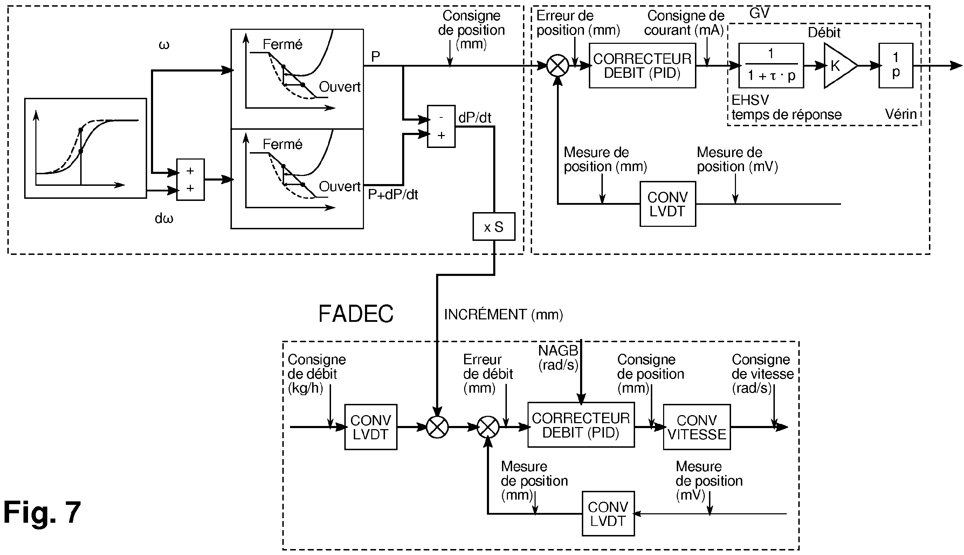

Par ailleurs, en référence aux figures 6 ou 7, le système d'alimentation en carburant diffère également de celui de la figure 1 en ce que le boîtier de commande 4' est relié au convertisseur 14, pour piloter la vitesse $\omega12$ et le couple du premier moteur 12 en vue d'adapter la vitesse $\omega1$ de la pompe 1, ainsi qu'au convertisseur 15, pour piloter le couple du second moteur 13 en vue de gérer le transfert de puissance entre les deux moteurs.

L'étude du réducteur 11 montre que le couple CA s'exerçant sur le planétaire 11A, le couple CB s'exerçant sur la couronne 11B et le couple CU s'exerçant sur le porte-satellites 11U sont reliés par deux relations :

$$CA + CB + CU = 0 \quad \text{(équilibre du train)}$$

$$\omega A\,{}^*CA + \omega B\,{}^*CB + \omega U\,{}^*CU = 0 \quad \text{(équilibre de puissance)}$$

Compte tenu des relations liant les vitesses de rotation de ces éléments, cela permet de calculer les couples s'exerçant sur deux éléments du réducteur 11 connaissant le troisième.

Le second moteur 13, étant mis en série avec la pompe 1 ou le boîtier 5, voit sa vitesse de rotation déterminée comme étant égale à celle de cet équipement.

On comprend cependant qu'il apporte un degré de liberté supplémentaire au système suivant le couple qu'il exerce, qui vient s'ajouter à celui de la pompe 1 ou du boîtier sur l'élément correspondant du réducteur 11.

Ce degré de liberté supplémentaire peut être utilisé pour assurer un transfert de puissance avec le premier moteur : soit fournir de la puissance lorsque le premier moteur 12 intervient pour accélérer la pompe1 par rapport à l'entraînement du boîtier 5, soit absorber de la puissance lorsque le premier moteur 12 intervient pour freiner la pompe1.

Il est possible d'utiliser d'autres configurations que celle illustrée sur la figure 5. Le choix dépend des caractéristiques de fonctionnement de la turbomachine. Le choix des paramètres du dispositif que sont le facteur k du réducteur 11 du train épicycloïdal 11, le rapport de la vitesse de rotation $\omega5$ en sortie du boîtier 5 par rapport à la vitesse de rotation de l'axe de la turbine, la caractéristique linéaire Cyl de la pompe 1, et le choix parmi les configurations 1A à 3B, doit être fait pour atteindre en particulier les objectifs suivants :

- permettre à la pompe 1 de tourner à une vitesse ω1 qui s'ajuste pour fournir un débit Cyl. ω1 correspondant au besoin F1, tel que représenté par exemple dans la figure 2, lorsque la vitesse de rotation de l'axe de la turbine varie entre ses valeurs minimale ωAGBmin et maximale ωAGBmax ;
- minimiser la puissance dépensée dans le moteur 12 pour ajuster la vitesse ω1 de la pompe 1 sur la plage de fonctionnement de la turbomachine.

Par ailleurs, les contraintes technologiques sur les équipements utilisés impliquent généralement que :

- la vitesse ω1 de la pompe 1 doit être inférieure à celle ω5 de l'arbre de sortie du boîtier de relais d'accessoires 5 .

Ce concept avec deux moteurs électriques auxiliaires pour le système d'entraînement entre le boîtier de relais d'accessoires 5 et la pompe 1 est très innovant car il offre les avantages suivants :

- Prélèvement sur le boîtier de relais d'accessoires 5 uniquement de la puissance mécanique correspondant au besoin de puissance pour l'alimentation des géométries variables (besoin en pression) et pour l'alimentation en débit carburant (besoin en débit carburant),
- réduction de la cylindrée de la pompe 1,
- réduction drastique du dimensionnement de la boucle de recirculation 9' du débit pompe,
- simplification de l'architecture du groupe hydromécanique 2 de régulation du carburant,
- aucun besoin en puissance externe lors du pilotage de la vitesse de la pompe par un moteur 12 grâce au transfert de puissance entre ce moteur et le second moteur 13.

Dans le système décrit dans ce qui précède, le premier moteur 12 et le second moteur 13 sont des équipements spécialement dédiés, ajoutés pour faire fonctionner le dispositif d'entraînement 6'. On peut, dans une variante, utiliser le démarreur de la turbomachine pour faire office de premier ou de second moteur du dispositif.
Le concept de système d'alimentation en carburant développé dans la suite permet une utilisation optimale d'un tel dispositif d'entraînement 6'.
En référence à la figure 6, un système d'alimentation en carburant selon l'invention, comprend :

- un dispositif d'entraînement 6' entre le boîtier de relais d'accessoire 5 et la pompe 1 tel que décrit précédemment, permettant d'adapter le régime de la pompe 1 ;
- une pompe 1 dimensionnée pour être adaptée au débit fourni avec le système selon l'invention ;
- un moyen d'alimentation 7 du circuit à partir des réservoirs de carburant 8 ;
- un bloc hydromécanique 2' selon l'invention ;
- une électronique de commande 4'.

Ici, le système d'alimentation en carburant est également connecté à des actionneurs 100 d'éléments mobiles 10.
Le groupe hydromécanique 2' selon l'invention comporte les éléments suivants :

- un capteur de débit 201 de carburant entre la pompe 1 et l'injection vers la chambre de combustion 3 ;
- un clapet de pressurisation 202 au niveau de l'injection vers la chambre de combustion 3;
- un clapet de retour 203 placé en dérivation entre le capteur de débit 201 et le clapet de pressurisation 202, et branché vers une boucle de recirculation 9' ;
- une servovalve 204 commandant essentiellement le clapet de pressurisation 202 et le clapet de retour 203.

Lorsque le circuit de carburant est utilisé pour actionner des éléments mobiles 10, le circuit de carburant comprend avantageusement une dérivation 205 pour alimenter en débit des actionneurs à géométries variables 100 des éléments mobiles 10. Cette dérivation 205 est ici placée entre la sortie de la pompe 1 et le capteur de débit 201 du groupe hydromécanique 2'.
Dans un mode de réalisation préféré, le capteur de débit 201 est réalisé par un doseur modifié. Un doseur généralement utilisé dans un circuit classique comprend un tiroir coulissant 211 dont la position commande le débit passant par le doseur. De plus, un capteur 212 de la position du tiroir 211 permet d'asservir le doseur, classiquement par une servovalve. Ici, la position du tiroir 211 n'est pas pilotée par une servovalve mais directement par la différence de pression aux bornes du doseur, à l'instar du pilotage de la soupape régulatrice de la solution classique. Connaissant la caractéristique de ce doseur, la position lue par le capteur 212 de position du tiroir 211 fournit l'information du débit réellement injecté par le circuit de carburant vers la chambre de combustion.

L'information de débit peut ainsi être, par exemple, transmise au boîtier de l'électronique de commande 4' pour qu'il agisse sur le dispositif d'entraînement 6' et que ce dernier adapte la vitesse de la pompe 1 pour assurer le débit de carburant adapté au besoin.

Le bloc hydromécanique 2' perd donc sa fonction de régulation du débit mais assure une fonction de capteur de débit. Il conserve les fonctions de coupure du carburant et de pressurisation du système par le clapet de pressurisation 202.

Le clapet de pressurisation 202 permet d'assurer la pression minimale pour le bon fonctionnement des géométries variables 100, ainsi que la coupure du débit injecté.

Le clapet de retour 203, permet d'assurer l'échappement du débit délivré par la pompe 1 afin de ne pas monter en pression dans le circuit, lors de l'activation de cette coupure par la servovalve 204.

Cependant cette recirculation n'existe que lors de la phase d'arrêt, ou lors de la préparation à l'allumage, le temps de la diminution de la vitesse de rotation de la pompe 1 qui est commandable. La boucle de recirculation 9' est donc nettement moins importante que pour un circuit classique.

À l'allumage, la pompe 1 est entraînée à une vitesse de rotation minimale. Une partie du débit traverse le capteur 201 et est recirculée par le clapet de retour 203.

La vitesse de la pompe 1 est ensuite adaptée pour atteindre la bonne consigne de débit d'allumage. La servovalve 204 est alors activée, ce qui entraîne l'ouverture du clapet de pressurisation 202, la fermeture du clapet de retour 203 et donc permet l'injection du débit d'allumage vers la chambre de combustion 3.

Enfin, le clapet de retour 203 assure la protection en cas de survitesse liée à une défaillance du contrôle de la vitesse de la pompe 1.

En cas d'appel de débit lié à l'actionnement des géométries variables 100, pour une vitesse de rotation donnée de la pompe 1, le débit traversant le capteur 201 tend à diminuer à cause de la dérivation 205 vers les géométries variables 100, qui est placée en amont. L'information d'une baisse de débit oblige le dispositif d'entraînement 6' à accélérer la vitesse de la pompe 1 afin de maintenir le bon débit injecté demandé. Ainsi, la vitesse de la pompe 1 est commandable.

Une boucle de contrôle basée sur l'information de débit du capteur 201, installée dans le boîtier de commande 4', permet donc d'adapter la vitesse de pompe pour tout point de fonctionnement de la turbomachine, que les géométries variables 100 soient actives ou non.

Ce concept de bloc hydromécanique 2' permet donc de tirer parti d'un dispositif d'entraînement 6' capable d'adapter la vitesse de rotation de la pompe au besoin.

Il n'y a donc plus besoin de dimensionner une boucle de recirculation 9' pour dissiper un surplus de débit important et cela permet de gagner en puissance prélevée sur le boîtier de relais d'accessoires 5 pour l'alimentation en carburant. Cela permet également de supprimer la soupape régulatrice qui existe dans un circuit classique.

De plus, la fonction de doseur ayant été supprimée, il n'est pas non plus besoin d'un surplus de débit pour la faire fonctionner.

Le bloc hydromécanique 2' permet donc de tirer parti au mieux du gain de puissance potentiel offert par le dispositif d'entraînement 6'.

La figure 7 représente schématiquement un correcteur anticipateur selon un mode de réalisation de l'invention. Le correcteur anticipateur s'adapte sur une boucle de régulation en débit utilisant la mesure de débit provenant du doseur, notamment la mesure de position du tiroir tel que décrit précédemment.

Cette mesure de position est comparée par un comparateur à la consigne de débit préalablement convertie en mm par une table de conversion position du tiroir/débit, pour donner l'erreur de débit (exprimée en mm), traité par un correcteur de débit de type PID pour donner une consigne de position. La consigne de position est convertie en consigne de vitesse du premier moteur 12 via une table de correspondance et grâce à la mesure de la vitesse de rotation ω de l'axe moteur de la turbomachine (tel que décrit en référence avec la figure 2).

Le correcteur anticipateur permet l'anticipation des appels de débits des géométries variables 100, cette anticipation étant exprimée par un incrément de débit qui est ajouté à la consigne de débit avant la boucle de régulation en débit.

Pour obtenir la valeur de cet incrément, le correcteur va utiliser le régime moteur de la turbomachine, en particulier la vitesse de rotation ωAGB de l'arbre moteur la turbomachine.

La position P des géométries variables 100 est directement déductible par une loi anticipative de la vitesse de rotation ωAGB de l'arbre moteur de la turbomachine exprimée sous la forme $P=f(\omega)$.

En outre, grâce à la même loi anticipatrice et connaissant aussi la variation $d\omega AGB/dt$ de la vitesse de rotation de l'arbre moteur de la turbomachine (par exemple à partir de deux mesures de cette vitesse), il est possible de déterminer $P+dP/dt$ avec $dP/dt$ la variation de la position P des géométries variables 100.

En soustrayant P de $P+dP/dt$, on obtient $dP/dt$ qui est ensuite converti en débit par multiplication avec une section des géométries variables 100 (par exemple la section interne des chambres des actionneurs) pour obtenir l'incrément de débit additionné à la consigne de débit.

Cette correction permet d'anticiper directement les appels de débit des géométries variable selon le régime moteur du turbomoteur. Ce type de correction anticipatrice est couramment appelée correction *feedforward* en anglais. La correction anticipatrice considère que la relation entre le régime moteur et la position des géométries variables 100 (et donc des éléments mobiles 10) est une loi connue déterminée selon les caractéristiques intrinsèques du turbomoteur considéré, et peut varier en fonction du turbomoteur mais est valable tout au long du cycle de vol pour un même turbomoteur.

**Revendications**

1. Système d'alimentation en carburant d'une turbomachine qui, en fonctionnement, tourne à un certain régime moteur selon les conditions de vol, comportant un circuit de carburant comportant un moyen de pressurisation (202) en sortie (3) dudit circuit, une pompe (1) agencée pour envoyer dans ledit circuit un débit de carburant qui est une fonction croissante de la vitesse de rotation (ω1) d'un arbre de ladite pompe, un capteur de débit (201) placé entre la sortie de la pompe (1) et le moyen de pressurisation (202), le système comportant un dispositif d'entraînement (6') agencé pour entraîner la pompe (1) avec une vitesse de rotation commandable, le dispositif d'entraînement (6') étant destiné à entraîner la pompe (1) à partir d'un axe moteur (26) de ladite turbomachine et étant agencé pour faire varier le rapport entre la vitesse de rotation de l'arbre de la pompe (1) et celle de l'axe moteur (26), dans lequel le dispositif d'entraînement comporte un réducteur (11) à train épicycloïdal comprenant trois éléments, dont un planétaire (11A) central, une couronne (11B) externe et un porte-satellites (11U) par lequel les satellites (11S) engrènent le planétaire et la couronne, un premier parmi les trois éléments étant destiné à être relié à l'axe moteur (26) et un second parmi les trois éléments étant destiné à être couplé à un arbre de la pompe (1), lesdits trois éléments étant mobiles en rotation autour d'un axe du réducteur, ledit dispositif d'entraînement comporte en outre au moins des premiers moyens électriques (12) agencés pour entraîner en rotation le troisième parmi les trois éléments du réducteur (11), de manière à modifier un rapport de vitesse de rotation entre le premier et le second desdits éléments, et des moyens (4') de commande agencés pour commander le dispositif d'entraînement (6') à partir d'une mesure fournie par le capteur de débit (201), de manière à adapter la vitesse de rotation (ω1) de l'arbre de la pompe (1) pour respecter une consigne de débit en sortie (3) du circuit de carburant, le circuit de carburant alimentant en débit des actionneurs à géométries variables (100) de la turbomachine, ladite alimentation débutant par un piquage sur une dérivation (205) placée entre la sortie de la pompe (1) et le capteur de débit (201), et **caractérisé en ce que** le système comprend en outre un correcteur anticipateur configuré pour calculer un incrément de la consigne de débit en fonction du régime moteur de la turbomachine et d'une variation dudit régime moteur de la turbomachine, et d'ajouter cet incrément à la consigne de débit, et **en ce que** le dispositif d'entraînement (6') comporte des seconds moyens électriques (13) couplés au premier ou au second desdits éléments du réducteur (11), les premier et second moyens électriques étant agencés pour transférer de la puissance électrique de manière réversible de l'un à l'autre.

2. Système d'alimentation selon la revendication 1, **caractérisé en ce que** le correcteur anticipateur détermine une position des éléments mobiles (10) via la position des actionneurs (100) à géométries variables à partir d'une loi associative prédéterminée liant la position des géométries variable au régime moteur, détermine une variation de ladite position des géométries variables (100) à partir de ladite loi associative et de la variation du régime moteur de la turbomachine et de la position des géométries variables (100), et calcule l'incrément de la consigne de débit en multipliant ladite variation de la position des géométries variables (100) par une section desdits actionneurs à géométries variables (100).

3. Système d'alimentation selon l'une des revendications 1 ou 2, **caractérisé en ce que** des boucles de commande des géométries variables et le correcteur anticipateur sont intégrés dans un FADEC d'un aéronef comprenant ledit turbomoteur.

4. Système d'alimentation selon l'une des revendications 1 à 3, dans lequel le capteur de débit (201) est réalisé par un doseur comprenant un tiroir coulissant (211) et un capteur (212) de position dudit tiroir, le circuit étant agencé pour que la position dudit tiroir indique le débit passant par le doseur.

5. Turbomachine comportant un système d'alimentation en carburant selon l'une des revendications 1 à 4.

6. Procédé de régulation d'une pompe (1) à carburant d'une turbomachine selon la revendication 5 dans un aéronef, mettant en oeuvre des lois de pilotage de la vitesse de rotation de l'arbre de la pompe (1), qui augmentent ou, respectivement, diminuent cette vitesse lorsque le débit indiqué par le capteur (201) diminue ou augmente, de manière à ce que le débit et la pression en sortie du circuit soit adapté aux conditions de vol de l'aéronef, **caractérisé en ce que** le procédé de régulation comprend une étape de correction anticipatrice de la consigne de débit en fonction du régime moteur de la turbomachine et d'une variation dudit régime moteur de la turbomachine.

7. Procédé de régulation selon la revendication 6, dans lequel l'étape de correction anticipatrice de la consigne de débit détermine une position des actionneurs à géométries variables à partir d'une loi associative prédéterminée liant la position des actionneurs à géométries variable au régime moteur, détermine une variation de ladite position des actionneurs à géométries variables à partir de ladite loi associative et de la variation du régime moteur de la turbomachine et de la position des actionneurs à géométries variables, et calcule l'incrément de la consigne de débit en multipliant ladite variation de la position des actionneurs à géométries variables par une section desdites géométries variables.

**Patentansprüche**

1. System zur Versorgung einer Turbomaschine mit Brennstoff, die sich im Betrieb gemäß den Flugbedingungen bei einer gewissen Motorgeschwindigkeit dreht, umfassend einen Brennstoffkreislauf, der ein Druckbeaufschlagungsmittel (202) am Ausgang (3) des Kreislaufs umfasst, eine Pumpe (1), die eingerichtet ist, um einen Brennstoffdurchsatz, der eine steigende Funktion der Drehzahl ($\omega$1) einer Welle der Pumpe ist, in den Kreislauf zu liefern, einen Durchsatzsensor (201), der zwischen dem Ausgang der Pumpe (1) und dem Druckbeaufschlagungsmittel (202) platziert ist, wobei das System eine Antriebsvorrichtung (6') umfasst, die eingerichtet ist, um die Pumpe (1) mit einer steuerbaren Drehzahl anzutreiben, wobei die Antriebsvorrichtung (6') dazu vorgesehen ist, die Pumpe (1) ausgehend von einer Motorachse (26) der Turbomaschine anzutreiben und eingerichtet ist, um das Übersetzungsverhältnis zwischen der Drehzahl der Welle der Pumpe (1) und jener der Motorachse (26) variieren zu lassen, wobei die Antriebsvorrichtung ein epizyklisches Untersetzungsgetriebe (11) umfasst, das drei Elemente umfasst, darunter ein mittleres Sonnenrad (11 A), eine äußere Krone (11 B) und einen Planetenträger (11U), durch den die Planeten (11 S) das Sonnenrad und die Krone in Eingriff nehmen, wobei ein erstes aus den drei Elementen dazu vorgesehen ist, mit der Motorachse (26) verbunden zu werden, und ein zweites aus den drei Elementen dazu vorgesehen ist, mit einer Welle der Pumpe (1) gekoppelt zu werden, wobei die drei Elemente um eine Achse des Untersetzungsgetriebes drehbeweglich sind, wobei die Antriebsvorrichtung weiter mindestens erste elektrische Mittel (12) umfasst, die eingerichtet sind, um das dritte aus den drei Elementen des Untersetzungsgetriebes (11) derart in Drehung zu versetzen, dass ein Drehzahlübersetzungsverhältnis zwischen dem ersten und dem zweiten der Elemente modifiziert wird, und Steuermittel (4'), die eingerichtet sind, um die Antriebsvorrichtung (6') ausgehend von einer von dem Durchsatzsensor (201) bereitgestellten Messung derart zu steuern, dass die Drehzahl ($\omega$1) der Welle der Pumpe (1) angepasst wird, um einen Solldurchsatz am Ausgang (3) des Brennstoffkreislaufs einzuhalten, wobei der Brennstoffkreislauf Aktuatoren mit variabler Geometrie (100) der Turbomaschine mit Durchsatz versorgt, wobei die Versorgung durch eine Abzweigung an einer zwischen dem Ausgang der Pumpe (1) und dem Durchsatzsensor (201) platzierten Ableitung (205) beginnt, und **dadurch gekennzeichnet, dass** das System weiter einen Vorkorrektor umfasst, der konfiguriert ist, um eine Erhöhung des Solldurchsatzes in Abhängigkeit von der Motorgeschwindigkeit der Turbomaschine und einer Variation der Motorgeschwindigkeit der Turbomaschine zu berechnen und diese Erhöhung zum Solldurchsatz hinzuzufügen, und dadurch, dass die Antriebsvorrichtung (6') zweite elektrische Mittel (13) umfasst, die mit dem ersten oder dem zweiten der Elemente des Untersetzungsgetriebes (11) gekoppelt sind, wobei die ersten und zweiten elektrischen Mittel eingerichtet sind, um elektrische Leistung auf umkehrbare Weise untereinander zu übertragen.

2. Versorgungssystem nach Anspruch 1, **dadurch gekennzeichnet, dass** der Vorkorrektor eine Position der mobilen Elemente (10) über die Position der Aktuatoren (100) mit variabler Geometrie ausgehend von einem vorbestimmten Verknüpfungsgesetz bestimmt, das die Position der variablen Geometrien mit der Motorgeschwindigkeit verbindet, eine Variation der Position der variablen Geometrien (100) ausgehend von dem Verknüpfungsgesetz und der Variation der Motorgeschwindigkeit der Turbomaschine und der Position der variablen Geometrien (100) bestimmt, und die Erhöhung des Solldurchsatzes durch Multiplizieren der Variation der Position der variablen Geometrien (100) mit einem Teil der Aktuatoren mit variable Geometrie (100) berechnet.

3. Versorgungssystem nach einem der Ansprüche 1 oder 2, **dadurch gekennzeichnet, dass** Steuerschleifen der variablen Geometrien und des Vorkorrektors in einer FADEC eines Luftfahrzeugs, das den Turbomotor umfasst, integriert sind.

4. Versorgungssystem nach einem der Ansprüche 1 bis 3, wobei der Durchsatzsensor (201) durch einen Dosierer umgesetzt ist, der ein Gleitfach (211) und einen Positionssensor (212) des Fachs umfasst, wobei der Kreislauf so eingerichtet ist, dass die Position des Fachs den durch den Dosierer laufenden Durchsatz angibt.

5. Turbomaschine, umfassend ein Brennstoffversorgungssystem nach einem der Ansprüche 1 bis 4.

6. Verfahren zur Regulierung einer Brennstoffpumpe (1) einer Turbomaschine nach Anspruch 5 in einem Luftfahrzeug, das Ansteuerungsgesetze der Drehzahl der Welle der Pumpe (1) einsetzt, die diese Geschwindigkeit derart erhöhen bzw. verringern, wenn sich der von dem Sensor (201) angegebene Durchsatz verringert bzw. erhöht, dass der Durchsatz und der Druck am Ausgang des Kreislaufs an die Flugbedingungen des Luftfahrzeugs angepasst werden, **dadurch gekennzeichnet, dass** das Regulierungsverfahren einen Schritt der Vorkorrektur des Solldurchsatzes in Abhängigkeit von der Motorgeschwindigkeit der Turbomaschine und einer Variation der Motorgeschwindigkeit der Turbomaschine umfasst.

7. Regulierungsverfahren nach Anspruch 6, wobei der Schritt der Vorkorrektur des Solldurchsatzes eine Position der Aktuatoren mit variabler Geometrie ausgehend von einem vorbestimmten Verknüpfungsgesetz bestimmt, das die Position der Aktuatoren mit variabler Geometrie mit der Motorgeschwindigkeit verbindet, eine Variation der Position der Aktuatoren mit variabler Geometrie ausgehend von dem Verknüpfungsgesetz und der Variation der Motorgeschwindigkeit der Turbomaschine und der Position der Aktuatoren mit variabler Geometrie bestimmt, und die Erhöhung des Solldurchsatzes durch Multiplizieren der Variation der Position der Aktuatoren mit variabler Geometrie mit einem Teil der variablen Geometrie berechnet.

**Claims**

1. A fuel supply system for a turbomachine which, in operation, rotates at a certain engine speed according to the flight conditions, comprising a fuel circuit comprising pressurising means (202) at the output (3) of said circuit, a pump (1) arranged to send into said circuit a fuel flow rate which is an increasing function of the rotational speed ($\omega$1) of a shaft of said pump, a flow rate sensor (201) placed between the output of the pump (1) and the pressurising means (202), the system comprising a drive device (6') arranged to drive the pump (1) with a controllable rotational speed, the drive device (6') being intended to drive the pump (1) from an engine shaft (26) of said turbomachine and being arranged to vary the ratio between the rotational speed of the shaft of the pump (1) and that of the engine shaft (26), wherein the drive device comprises a reduction gear (11) with an epicyclic gear train comprising three elements, including a central planetary gear (11A), an external ring gear (11B) and a planet carrier (11U) through which the planet gears (11S) mesh with the planetary gear and the ring gear, a first of the three elements being intended to be connected to the engine shaft (26) and a second of the three elements being intended to be coupled to a shaft of the pump (1), said three elements being rotatable about an axis of the reduction gear, said driving device further comprises at least first electrical means (12) arranged to rotate the third of the three elements of the reduction gear (11), so as to change a rotational speed ratio between the first and second of said elements, and control means (4') arranged to control the drive device (6') on the basis of a measurement provided by the flow rate sensor (201), so as to adapt the rotational speed ($\omega$1) of the shaft of the pump (1) to comply with a flow rate setpoint at the output (3) of the fuel circuit, the fuel circuit supplying flow rate to variable-geometry actuators (100) of the turbomachine, said supply beginning with a tapping on a bypass (205) placed between the output of the pump (1) and the flow rate sensor (201), and **characterised in that** the system further comprises a feedforward corrector configured to calculate an increment of the flow rate setpoint as a function of the engine speed of the turbomachine and of a variation in said engine speed of the turbomachine, and to add this increment to the flow rate setpoint, and **in that** the drive device (6') comprises second electrical means (13) coupled to the first or second of said elements of the reduction gear (11), the first and second electrical means being arranged to transfer electrical power reversibly from one to the other.

2. The supply system according to claim 1, **characterised in that** the feedforward corrector determines a position of the moving elements (10) via the position of the variable-geometry actuators (100) from a predetermined associative law linking the position of the variable geometries to the engine speed, determines a variation in said position of the variable geometries (100) from said associative law and from the variation in the engine speed of the turbomachine and the position of the variable geometries (100), and calculates the increment of the flow rate setpoint by multiplying said variation in the position of the variable geometries (100) by a section of said variable-geometry actuators (100).

3. The supply system according to one of claims 1 or 2, **characterized in that** control loops of the variable geometries and the feedforward corrector are integrated in a FADEC of an aircraft comprising said turbine engine.

4. The supply system according to one of claims 1 to 3, wherein the flow rate sensor (201) is produced by a metering device comprising a sliding slide (211) and a sensor (212) for detecting the position of said slide, the circuit being arranged so that the position of said slide indicates the flow rate passing through the metering device.

5. A turbomachine comprising a fuel supply system according to one of claims 1 to 4.

6. A method of regulating a fuel pump (1) of a turbomachine according to claim 5 in an aircraft, implementing laws for controlling the rotational speed of the shaft of the pump (1), which increase or, respectively, decrease this speed when the flow rate indicated by the sensor (201) decreases or increases, so that the flow rate and the pressure at the output of the circuit are adapted to the flight conditions of the aircraft, **characterized in that** the method of regulating comprises a step of feedforward correction of the flow rate setpoint as a function of the engine speed of the turbomachine and of a variation in said engine speed of the turbomachine.

7. The method of regulating according to claim 6, in which the step of feedforward correction of the flow rate setpoint determines a position of the variable-geometry actuators on the basis of a predetermined associative law linking the position of the variable-geometry actuators to the engine speed, determines a variation in said position of the variable-geometry actuators from said associative law and from the variation in the engine speed of the turbomachine and in the position of the variable-geometry actuators, and calculates the increment of the flow rate setpoint by multiplying said variation in the position of the variable-geometry actuators by a section of said variable geometries.

## Fig. 1

**Fig. 3**

**Fig. 4a**

**Fig. 4b**

**Fig. 4**

**Fig. 4c**

Fig. 5

Fig. 6

**Fig. 7**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2010064657 A1
- FR 2934321 A1
- EP 2599982 A1